(19) **Europäisches Patentamt European Patent Office Office européen des brevets**

(11) **EP 1 230 750 B1**

(12) **EUROPEAN PATENT SPECIFICATION**

(45) Date of publication and mention
of the grant of the patent:
**06.08.2008 Bulletin 2008/32**

(51) Int Cl.:
*H04B 7/216* (2006.01)     *H04L 27/20* (2006.01)

(21) Application number: **00978290.5**

(22) Date of filing: **27.10.2000**

(86) International application number:
**PCT/US2000/029798**

(87) International publication number:
**WO 2001/033740 (10.05.2001 Gazette 2001/19)**

(54) **SYSTEM AND METHOD FOR INCREASING FEEDER LINK CAPACITY IN A SATELLITE COMMUNICATIONS SYSTEM**

SYSTEM UND METHODE FÜR DIE ERHÖHUNG VON VORWÄRTSVERBINDUNGSKAPAZITÄT IN EINEM SATELLITENKOMMUNIKATIONSSYSTEM

SYSTEME ET PROCEDE ACCROISSANT LA CAPACITE DE LA LIAISON D'ALIMENTATION DANS UN SYSTEME DE COMMUNICATION PAR SATELLITE

(84) Designated Contracting States:
**AT BE CH CY DE DK ES FI FR GB GR IE IT LI LU MC NL PT SE**

(30) Priority: **29.10.1999 US 430688**

(43) Date of publication of application:
**14.08.2002 Bulletin 2002/33**

(60) Divisional application:
**08010589.3**

(73) Proprietor: **QUALCOMM INCORPORATED**
**San Diego, CA 92121-1714 (US)**

(72) Inventor: **SCHIFF, Leonard, N.**
**San Diego, CA 92130 (US)**

(74) Representative: **Dunlop, Hugh Christopher et al**
**R.G.C. Jenkins & Co.**
**26 Caxton Street**
**London SW1H 0RJ (GB)**

(56) References cited:
**EP-A- 0 829 982          WO-A-99/35736**
**US-A- 5 691 974**

• **GAUDENZI DE R ET AL: "CAPACITY OF A MULTIBEAM, MULTISATELLITE CDMA MOBILE RADIO NETWORK WITH INTERFERENCE-MITIGATING RECEIVERS" IEEE JOURNAL ON SELECTED AREAS IN COMMUNICATIONS,IEEE INC. NEW YORK,US, vol. 17, no. 2, February 1999 (1999-02), pages 204-213, XP000851755 ISSN: 0733-8716**

**Description**

**BACKGROUND OF THE INVENTION**

**I. Field of the Invention**

The present invention relates generally to satellite communications, and more particularly to increasing feeder link capacity for ground-to-satellite communications by transmitting a QPSK signal formed from two BPSK signals.

**II. Related Art**

Today, competing satellite communication systems offer mobile and fixed satellite-based voice and data services that reach the most remote areas of the world at a competitive cost. Users having specially equipped communication devices communicate directly with a satellite orbiting overhead, rather than, for example, with a terrestrial base station as in a conventional cellular network. The satellite (and in some cases, more than one satellite) receives, amplifies, and retransmits these signals to one or more Earth stations, referred to herein as a gateway or hub. The gateway then transfers the information to an existing communications network (for example, a Public Switched Telephone Network (PSTN), a Public Land Mobile Network (PLMN), another gateway) or within the same gateway for transfer to other signal recipients. Similarly, calls originating from an existing communications network pass through the gateway, up to the satellite, and then down to the destination user. Networks of satellites orbiting the earth can provide coverage for vast geographical areas.

Satellite communication systems provide economical long distance transmission (cost is not necessarily a function of distance), broad service coverage, freedom from man-made restrictions or natural barriers such as geopolitical boundaries, capability of covering undeveloped areas without having to add a costly land telephone infrastructure, and new service capabilities such as position location.

As these satellite communication systems gain users even more users want to make use of such systems and capacity becomes an increasingly important issue. Existing systems employ one or more channelization techniques to increase capacity, such as frequency division multiple access (FDMA), code division multiple access (CDMA), time division multiple access (TDMA), spatial channelization (sometimes called frequency reuse), and polarization multiplexing schemes.

A description of satellite communications systems employing code division multiple access (CDMA) spread-spectrum signals, is disclosed in U.S. Patent No. 4,901,307, issued February 13, 1990, entitled "*Spread Spectrum Multiple Access Communication System Using Satellite or Terrestrial Repeaters*," and U. S Patent No. 5,691,974, which issued November 25, 1997, entitled "*Method and Apparatus for Using Full Spectrum Trartsmitted Power in a Spread Spectrum Communication System for Tracking Individual Recipient Phase Time and Energy*," both of which are assigned to the assignee of the present invention.

On the forward link, information is transmitted from a gateway to a user terminal over one or more beams formed through the use of beam-forming antennas. Each beam, covers a particular geographic region within the footprint of the satellite. These beams often comprise a number of so-called subbeams (also referred to as frequency division multiple access (FDMA) channels, or CDMA channels) covering a common geographic area, each occupying a different frequency band. More specifically, in a conventional spread-spectrum communication system, one or more preselected pseudorandom noise (PN) code sequences are used to modulate or "spread" user information signals over a predetermined spectral band prior to modulation onto a carrier signal for transmission as communication signals. In addition, the information signals are typically transferred over both an In-Phase channel using a $PN_t$ spreading code and a Quadrature-phase channel using a $PN_Q$ code. PN spreading is a method of spread-spectrum transmission that is well known in the art, and produces a communication signal with a bandwidth much greater than that of the data signal. On the forward link, PN spreading codes are generally shared by all communication signals within a given subbeam.

In a conventional CDMA spread-spectrum communication system, "channelizing" codes are used to discriminate between different user terminals within a satellite sub-beam on a forward link. The channelizing codes form orthogonal channels in a subbeam over which communication signals are transferred. That is, each user terminal has its own orthogonal channel provided on the forward link by using a unique channelizing orthogonal code. Walsh functions are generally used to implement the channelizing codes, also known as Walsh codes or Walsh sequences, and create what are known as Walsh channels. A typical orthogonal code length is 64 code chips for terrestrial systems and 128 code chips for satellite systems.

EP 0 829 982 A1 describes one approach to increasing bandwidth in a forward link in a terrestrial based system, where a method is described for modulating two quadrature phase shift key (QPSK) signals into a forward link signal, which is also QPSK spread. Although the method is readily applicable to existing terrestrial based systems, it does not provide the bandwidth along the reverse link to enable efficient and cost-effective use of satellite communication systems that typically employ BPSK modulation.

While the systems discussed above employ channelization techniques to increase capacity, future capacity requirements could demand even more capacity than these conventional techniques can currently provide. For example, the maximum number of users each satellite can service is determined, in part, by the capacity of the gateway-to-satellite communications link, referred to herein as the feeder link. This has been described as the feeder link bandwidth scarcity problem, and occurs regardless of the channelization or modulation technique employed. The bandwidth available to the feeder link must be used in an efficient manner, given that feeder link capacity provides an upper limit to the number of users a particular satellite can service.

A need, therefore, exists for an improved system and method for increasing feeder link capacity.

SUMMARY OF THE INVENTION

Briefly stated, a preferred embodiment of the present invention is directed to a system and a method for satellite communications wherein at least one gateway communicates with a satellite over a feeder link, and the satellite communicates with terrestrial user terminals over a user link. A feeder link signal is produced by multiplexing, at the gateway, a first binary phase shift keyed (BPSK) signal and a second BPSK signal. The feeder link signal is quadrature phase shift keyed (QPSK) modulated, and QPSK spread. The feeder link signal is transmitted from the gateway to the satellite. The satellite demultiplexes the feeder link signal, recovering the first and second BPSK signals. The first and second BPSK signals are then modulated, at the satellite, to produce both first and second user link signals. The two user link signals are then BPSK modulated, and QPSK spread. The user link signals are transmitted from the satellite to one or more user terminals.

The current invention increases feeder link capacity by transmitting QPSK modulated, QPSK spread signals over the feeder link rather than BPSK modulated, QPSK spread signals. The feeder link capacity is approximately doubled because both signals have approximately the same bandwidth, but QPSK modulated, QPSK spread signals carry twice the information. This increase in capacity comes at the expense of additional system complexity and hardware costs at the gateway and at the satellite, which is not of great concern in some communication systems that are otherwise capacity limited.

An advantage of the current invention is that feeder link capacity can be increased without requiring modifications to existing user equipment that communicates with the satellite using BPSK modulated, QPSK spread signals. This eliminates having to redeploy large numbers of user terminals or wireless equipment to accommodate new users. The QPSK modulated, QPSK spread feeder link signal is demultiplexed at the satellite, forming two BPSK modulated, QPSK spread signals that are then transmitted to the user terminals.

Further features and advantages of the invention, as well as the structure and operation of various embodiments of the invention, are described in detail below with reference to the accompanying drawings.

BRIEF DESCRIPTION OF THE DRAWINGS

The present invention will be described with reference to the accompanying drawings. In the drawings, like reference numbers generally indicate identical, functionally similar, and/or structurally similar elements. The drawing in which an element first appears is indicated by the leftmost digit(s) in the corresponding reference number.

FIG. **1** depicts a satellite communications environment within which the present invention is used;
FIG. **2**A depicts a preferred frequency plan for the forward direction feeder link;

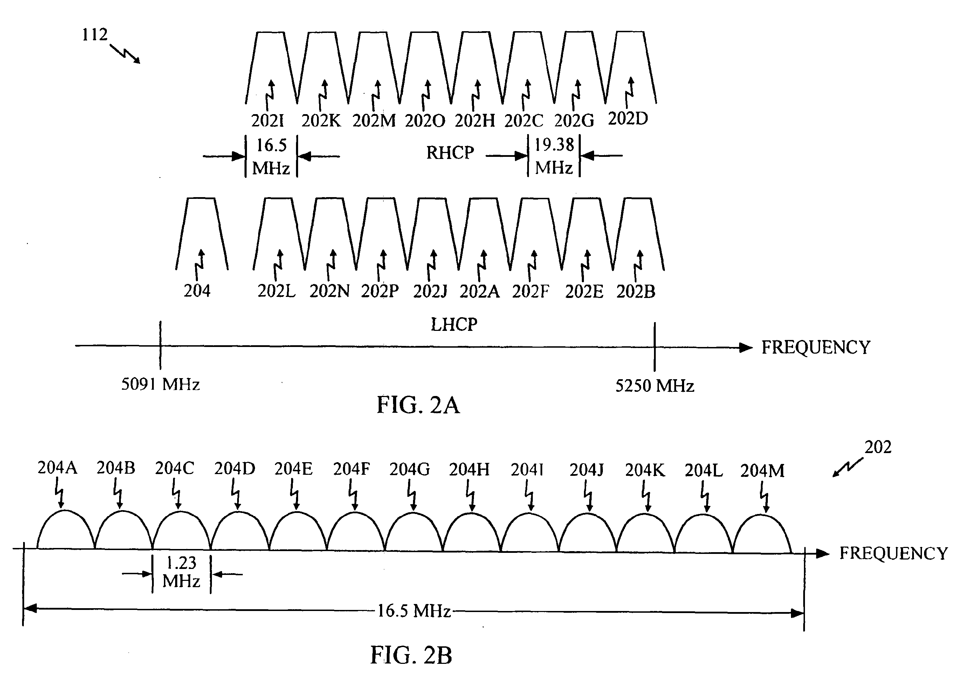

FIG. **2**B depicts a preferred frequency plan for a user link beam;

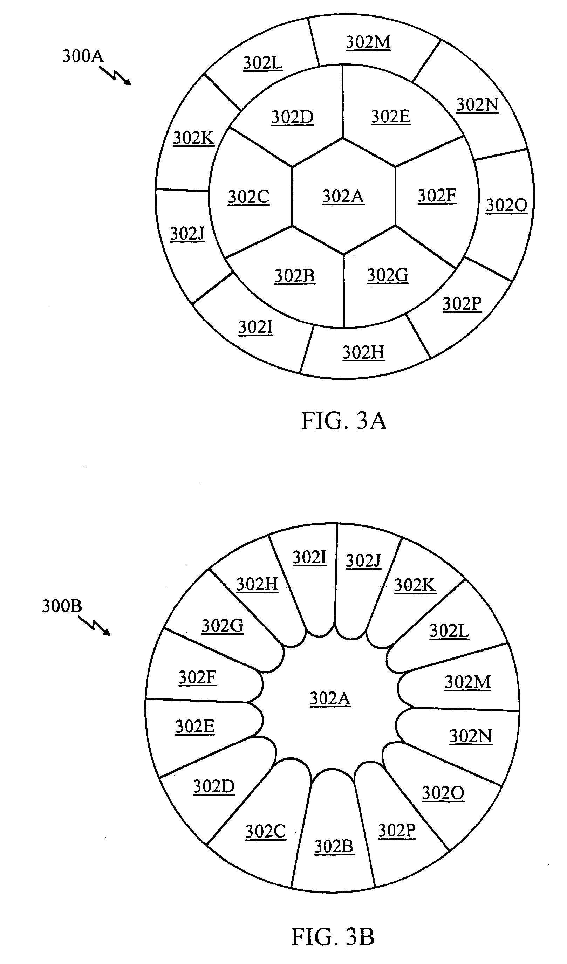

FIG. **3**A depicts a preferred spatial channelization of the forward user link having a footprint divided into beams;
FIG. **3B** depicts a preferred spatial channelization of the reverse user link having a footprint divided into beams;

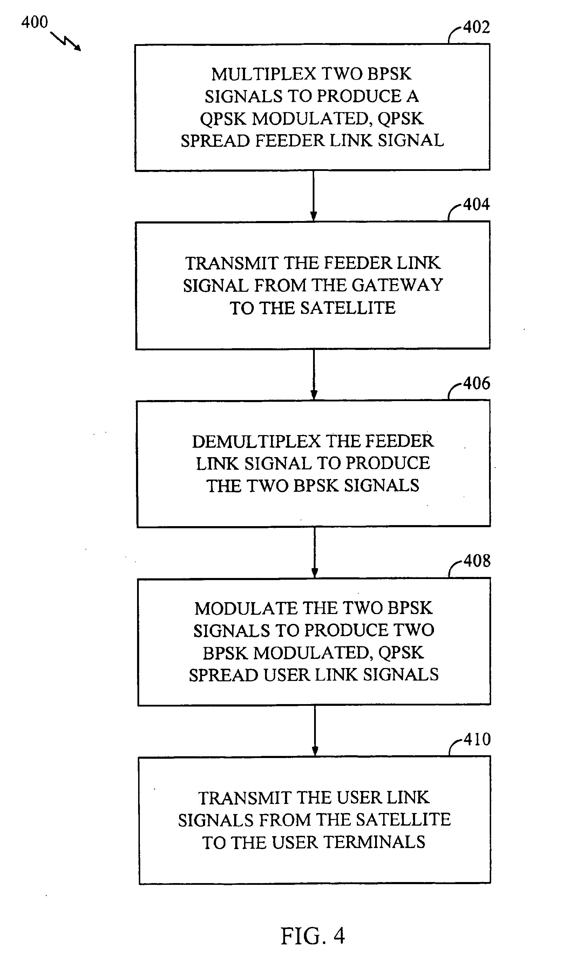

FIG. **4** depicts a flowchart that describes a preferred method for increasing feeder link capacity;

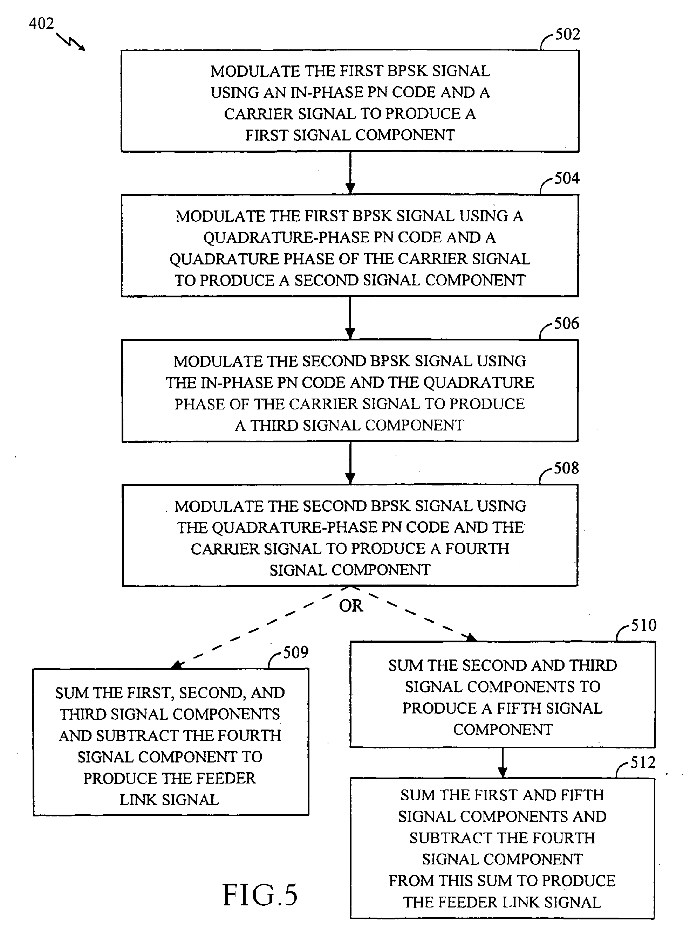

Fig. **5** depicts a flowchart that describes in further detail the production of QPSK/QPSK feeder link signals;

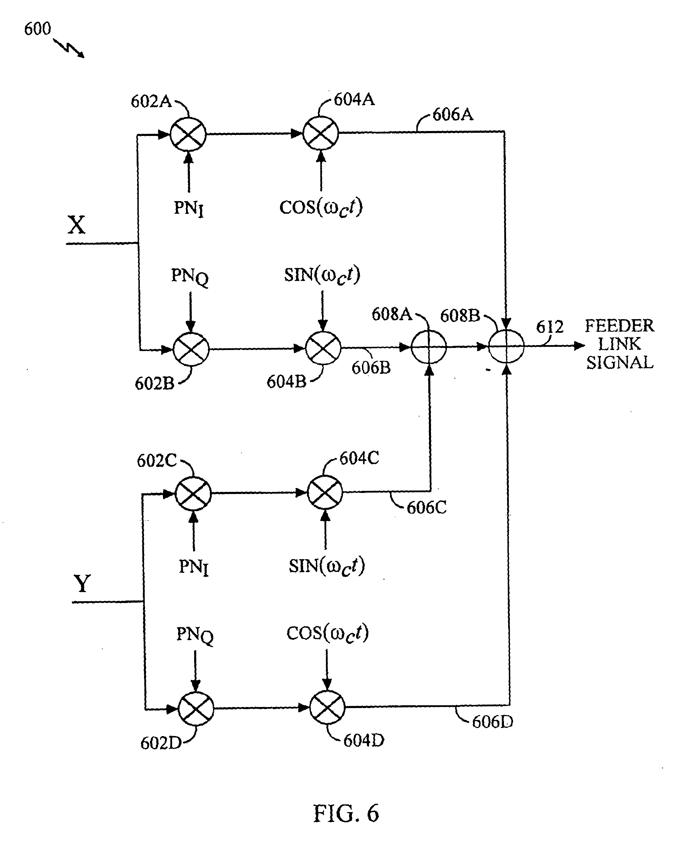

FIG. **6** depicts a preferred apparatus for performing the multiplexing operation;

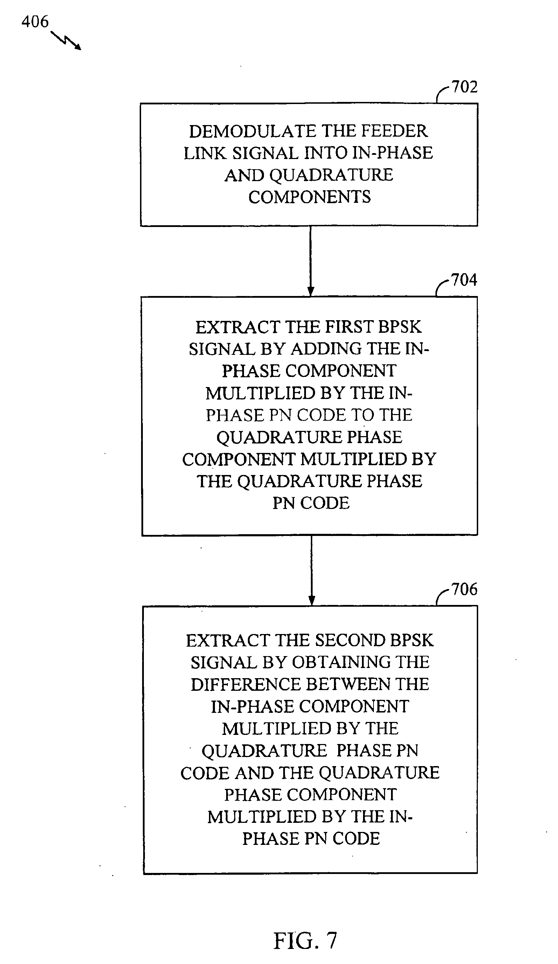

FIG. **7** depicts a flowchart that describes demultiplexing the feeder link signal in greater detail; and

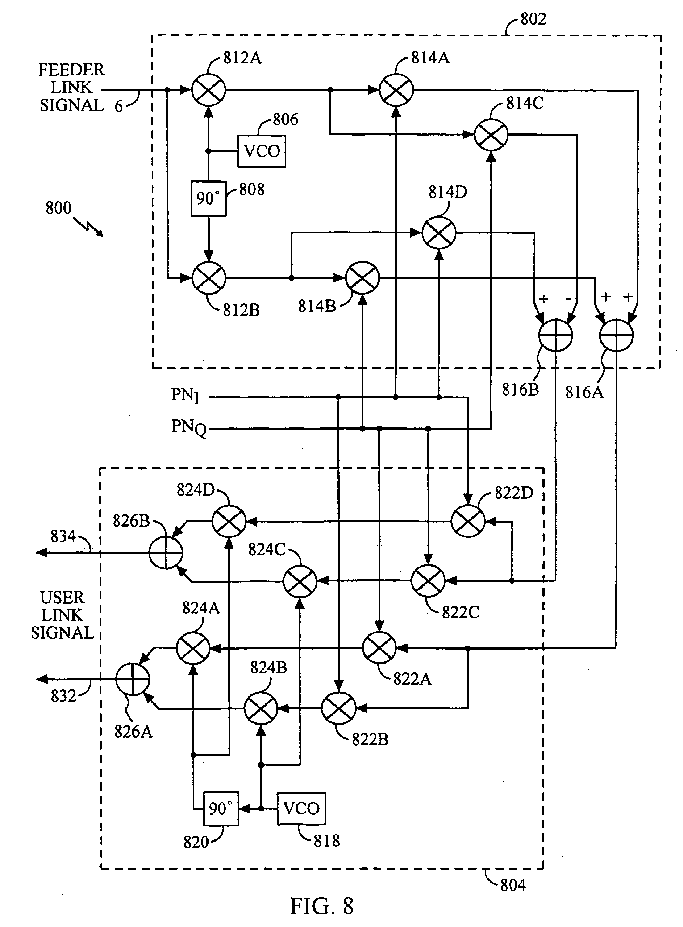

FIG. **8** depicts a preferred apparatus for performing the demultiplexing operation.

DETAILED DESCRIPTION OF THE PREFERRED EMBODIMENTS

**I. Overview Of The Environment**

The present invention is directed to a system and method for increasing the feeder link capacity in a satellite communications system. The gateway combines (multiplexes) two BPSK signals to form a QPSK signal. The resulting QPSK signal, referred to herein as a feeder link signal, is then transmitted using the feeder link from the gateway to the satellite. The satellite splits (demultiplexes) the feeder link signal back into two BPSK signals which are transmitted to the user terminals. Feeder link capacity is thereby approximately doubled because the QPSK feeder link signal, which includes the information of two BPSK signals, has approximately the same bandwidth as a single BPSK signal.

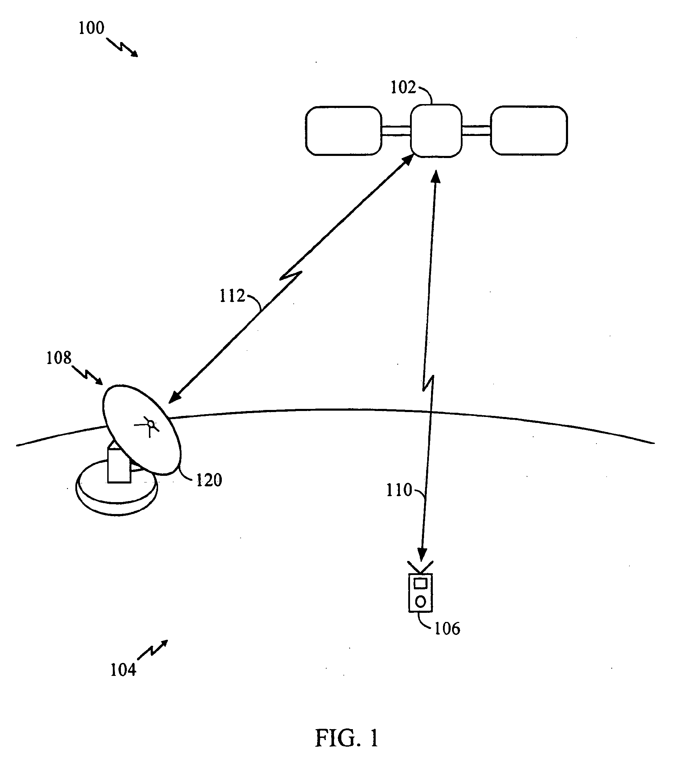

FIG. 1 depicts a satellite communications environment 100 within which the present invention is useful. A satellite 102, in orbit around Earth 104, communicates with a user terminal 106 over a user link 110. Satellite 102 also communicates with a gateway 108 over a feeder link 112.

Satellite 102 is preferably a simple, low cost satellite designed to minimize both production costs and launch costs. Satellite 102 is preferably in a low earth orbit, which permits communication with low power user terminals 106 (for example, wireless devices such as portable phones). However, those skilled in the art will recognize that the principles described herein apply to satellites of varying sophistication and orbit, as well as a variety of wireless devices.

User terminal 106 can represent many different communication such as, but not limited to, a wireless telephone, a data transceiver, or a paging or position determination receiver, and can be hand-held, mobile or vehicle mounted, or fixed station units, as desired. A typical hand held unit is similar in design to a conventional cellular phone. In a preferred embodiment, the hand held unit can communicate with terrestrial cellular networks as well as with satellite 102. A typical mobile user terminal includes a hand set and a car kit. The car kit provides battery power, a higher RF power output and a higher gain antenna. Fixed station units communicate with satellite 102, but typically not with other terrestrial cellular networks. The fixed station units are generally used to serve areas that are not served by terrestrial cellular or wireline networks. They are fixed installations with a primary power source, higher RF power and a fixed high gain antenna.

Gateway 108 connects user terminal 106 through satellite 102 to other terrestrial communication networks (for example, cellular systems, conventional phone networks, satellite systems) and to other gateways. For example, gateway 108 receives telephone calls or other requests for communication (such as faxes and text messages) from terrestrial switching equipment (not shown) and transmits the calls to the appropriate user terminals 106 using feeder link 112 and user link 110. In the return direction, user terminal 106 transmits to gateway 108 using user link 110 and feeder link 112. Gateway 108 then connects the communication link or call to the terrestrial switching equipment which can then connect to other desired signal recipients through the standard telephone system. Connections can also be made to terrestrial cellular subscribers or to another user terminal 106 directly from the gateway. In a preferred embodiment, gateway 108 employs one or more parabolic antennas 120 to establish feeder link 112. Gateway 108 supports, for example, voice communications, paging, messaging, and data transmissions.

Feeder link 112 represents the two-way communication between satellite 102 and gateway 108. In a preferred embodiment, feeder link 112 includes all communications between user terminals 106 serviced by satellite 102 and the terrestrial communication networks connected to gateway 108. Feeder link 112 also includes other communications, such as telemetry and control commands transferred between gateway 108 and satellite 102 or user terminals 106.

FIG. 2A depicts a preferred frequency plan for the forward direction feeder link 112 (that is, from gateway 108 to satellite 102). Communications between gateway 108 and satellite 102 employ FDMA, CDMA, and polarization multiplexing schemes to make efficient use of the available bandwidth. As shown in FIG. 2A, the frequency band of feeder link 112 is divided into two or more channels 202, corresponding to user links 110. In a preferred embodiment, the band is divided into eight channels 202 (I, K, M, O, H, C, G, and D) employing right hand circular polarization (RHCP) and eight channels 202 (L, N, P, J, A, F, E, and B) employing left hand circular polarization (LHCP). In a typical system design, each channel 202 preferably covers a 16.5 MHz wide bandwidth, spaced 19.38 MHz apart between 5091 MHz and 5250 MHz. Feeder link 112 also includes a command channel 204 that carries command information between satellite 102 and gateway 108.

FIG. 2B depicts a preferred frequency plan for an example channel 202. As shown, each channel 202 is made up of two or more (preferably 13) FDMA subchannels 204, also referred to as user link beams or CDMA channels in a CDMA communication system. Each user link beam 204 is further divided into two or more orthogonal code channels typically implemented using Walsh code sequences (preferably up to 128). For example, a user link beam 204 might contain 128 signals or signal channels, each destined for a different user terminal 106, where each signal is BPSK modulated according to conventional techniques. Many different types of information can be transmitted over each CDMA channel including, but not limited to, voice and data.

A similar frequency plan is preferably employed for the reverse direction feeder link 112, with the channels 202 spaced between 6875 MHz and 7075 MHz. Otherwise, the reverse direction feeder link 112 is substantially identical to the forward link described with respect to FIG. 2A and 2B.

User link 110 represents the two-way communication between satellite 102 and user terminals 106 serviced by satellite 102. In a preferred embodiment, user link 110 employs spatial channelization to make efficient use of the available spectrum. Spatial channelization can be employed to divide the terrestrial area serviced by a satellite, referred to herein as the satellite's footprint, into two or more service regions. Spatial channelization is made possible by various techniques for producing beams, that is, the directional transmission of electromagnetic energy. A beam is formed for each region, such that most of the energy transmitted using a beam illuminates the ground within the service region.

This allows a small set of frequencies to be reused in known patterns across the footprint. CDMA communications systems allow the same set of frequencies to be used in adjacent regions. It is understood that similar techniques are used for receiving signals that are transmitted by users within the service region at the satellite. Again, the general concepts described herein apply to other embodiments employing alternative techniques for increasing capacity.

FIG. **3**A depicts the spatial channelization of user link **110** divided into beams **302**A through **302**P, referred to collectively as an antenna beam configuration **300**A. The outer perimeter of antenna beam configuration **300**A defines the approximate limits of the geographic region serviced by satellite **102**. Those user terminals **106** within this region are serviced by (at least) satellite **102**. Antenna beam configuration **300**A is preferably used in the forward direction (that is, from satellite **102** to user terminals **106**) user link **110**. In one alternative embodiment, each beam transmits signals with substantially uniform strength across the area defined for it in FIG. **3**A, including an appropriate compensation for the curvature of the earth (that is, an isoflux pattern). However, each pattern preferably takes into account any non-uniform distribution of user terminals **106** across each beam **302,** as described in commonly owned, co-pending U.S. Patent Application Serial No. 09/378,562, filed August 19, 1999, entitled "*Satellite Communication System Using Wide Fixed Beams And Narrow Steerable Beams,*" which is incorporated herein by reference.

FIG. **3**B depicts an alternative antenna beam configuration **300**B, which is preferably used in the reverse direction of user link **110** (that is, from user terminals **106** to satellite **102**). Comparing FIGS. **3**A and 3B illustrates that the antenna beam configurations for the forward and reverse user links are preferably different from one another. Other alternative embodiments use the same antenna beam configurations for both.

Satellite **102** essentially acts as a transponder, receiving signals from a gateway, hub, fixed or base-station **108** over feeder link **112** and re-transmitting them to user terminals **106** over user link **110**. Satellite **102** demultiplexes the signals on feeder link **112** into two or more channels **202** and command channel **204,** where used. All communications destined for those user terminals **106** within a given beam **302** are transmitted over a single channel **202**. The individual user terminals **106** then select their assigned code channel within a subbeam or CDMA channel according to spread spectrum techniques known to those skilled in the art. Though not discussed herein, satellite **102** also acts as a transponder to route reverse user link **110** to gateway **108** using reverse feeder link **112.**

A network of satellites **102** is preferably deployed having partially overlapping service areas. This network can provide service to user terminals **106** over large geographic areas, as is well known.

In a preferred embodiment, the subchannel signal or user link beam transmitted over user link **110** takes the form:

$$X*PN_I*cos(\omega_c t) + X*PN_Q *)sin(\omega_c t)$$

where $X$ is the sum of the binary data modulated Walsh codes for those user terminals **106** assigned to the particular user link beam **204,** $PN_I$ is an in-phase pseudo-noise (PN) spreading sequence, $PN_Q$ is a quadrature phase PN spreading sequence, and $\omega_c$ is the center frequency of user link beam **204** over which the signal is being transmitted. These signals are described as BPSK modulated, QPSK spread (BPSK/QPSK): BPSK modulated because $X$ represents the same information signal, $X$, which modulates both the in-phase and quadrature components; and QPSK spread because the signal employs two different spreading sequences ($PN_I$ and $PN_Q$). This differs from true QPSK modulation in that only one signal ($X$) is driving both the in-phase and quadrature components.

User terminals **106** receive this user link beam signal, despread the in-phase and quadrature portions using the spreading sequences, and then select their assigned code channel. This BPSK/QPSK signal is preferably transmitted over user link **110**. As mentioned above, in newer or next generation satellite communication systems it will be desirable to add additional user capacity. This may require the addition of more beams on the user link, and associated subchannels on the feeder link. However, in order to accommodate existing systems, regulatory frequency allocations, and so forth, there is a need or desire to stay within the same allocated feeder bandwidth. Therefore, a technique is needed that allows additional beams to be transferred over the feeder link within that existing bandwidth. Even when additional bandwidth is available, there may still exist certain constraints that unacceptably limit the number of beams possible using current approaches.

As described below, according to the present invention, the BPSK/QPSK signal is replaced with a QPSK modulated / QPSK spread signal (QPSK/QPSK) signal for transmission over feeder link **112**. As a result, twice as many user link signals can be transmitted over feeder link **112** without increasing the required bandwidth. Feeder link **112** capacity is, therefore, doubled.

## II. Overview Of The Invention

FIG. **4** depicts a flowchart that describes a preferred method according to the present invention for increasing the capacity of feeder link **112.** In step **402,** two BPSK signals are multiplexed together to produce a QPSK/QPSK feeder link signal. This multiplexing operation is preferably performed by gateway **108,** although it can be implemented elsewhere as desired. In step **404,** the QPSK/QPSK feeder link signal is transmitted via feeder link **112** from gateway **108** to satellite **102.**

In step **406,** satellite **102** demultiplexes the QPSK/QPSK signal back into the two original BPSK signals. In step **408,** the two BPSK signals are modulated to form BPSK/QPSK user link signals. In step **410,** the user link signals are transmitted via user link **110** from satellite **102** to user terminals **106.** Transmitting QPSK/QPSK feeder link signals rather than BPSK/QPSK effectively doubles the feeder link capacity, because both require approximately the same bandwidth but QPSK/QPSK carries twice the information. For current communication system designs, this increase in capacity would come at the expense of additional hardware being added to satellite **102** to demultiplex and re-modulate the QPSK/QPSK feeder link signals.

The following sections describe these steps in detail.

## III. Producing QPSK/QPSK Feeder Link Signals

FIG. **5** depicts a flowchart that describes in further detail the production of QPSK/QPSK feeder link signals in step **402.** These operations are described in conjunction with FIG. **6,** which depicts a preferred apparatus, multiplexer **600,** for performing the multiplexing operation. Multiplexer **600** includes eight modulators **602**A, **602**B, **602**C, **602**D, **604**A, **604**B, **604**C, and **604**D, and two adders **608**A and **608**B. However, the function of adders **608**A and **608**B could be performed by a single logical adder element, although usually less convenient to implement. Multiplexer **600** accepts two BPSK signal inputs, shown as $X$ and $Y$ in FIG. **6,** and outputs a QPSK/QPSK feeder link signal **612.** Multiplexer **600** is preferably located in gateway **108,** but those skilled in the art will recognize that these operations could equivalently be performed elsewhere so long as a communications pathway is established with gateway **108.**

In step **502,** the first BPSK signal, $X$ as shown in FIG. **6,** is modulated by an in-phase PN spreading code ($PN_I$) and a carrier signal to produce a first signal component **606**A. Modulator **602**A modulates $X$ by $PN_I$, generally by multiplication, and modulator **604**A modulates the output of modulator **602**A by $cos(\omega_c t)$. The resulting first signal component can be expressed as $X*PN_I*cos(\omega_c t)$.

In step **504,** $X$ is modulated by a quadrature phase PN spreading code ($PN_Q$) and a quadrature phase carrier signal to produce a second signal component **606**B. Modulator **602**B modulates $X$ by $PN_Q$ and modulator **604**B modulates the output of modulator **602**B by $sin(\omega_c t)$. The resulting second signal component can be expressed as $X*PN_Q*sin(\omega_c t)$.

In step **506,** the second BPSK signal, $Y$ as shown in FIG. **6,** is modulated by $PN_I$ and the quadrature phase carrier signal to produce a third signal component **606**C. Modulator **602**C modulates Y by $PN_I$ while modulator **604**C modulates the output of modulator **602**C by $sin(\omega_c t)$. The resulting third signal component can be expressed as $Y*PN_I*sin(\omega_c t)$.

In step **508,** $Y$ is modulated by $PN_Q$ and the carrier signal to produce a fourth signal component. Modulator **602**D modulates Y by $PN_Q$. while modulator **604**D modulates the output of modulator **602**D by $cos(\omega_c t)$. The resulting fourth signal component can be expressed as $Y*PN_Q*cos(\omega_c t)$.

Next, the process adds or sums the first, second, and third, signal components (**606**A, **606**B, and **606**C) together while subtracting, or performing a sign reversed summation of, the fourth signal component (**606**D). This can be thought of as using a single summation element in a step **509,** with is a functional combination of elements **608**A and **608**B shown in FIG. **6**, to perform this summation. However, in a preferred embodiment, the summation processing is subdivided into smaller steps using the individual summation elements **608**A and **608**B shown in FIG. **6**. It will be readily apparent to those skilled in the art that this is presented as an example implementation technique and that fewer more complex or more less complex elements may be used to implement the desired summation or combination of signals.

In step **510,** the second, and third signal components **606**B and **606**C are summed to produce a fifth signal component. Adder **608**A performs this summing operation. In step **512,** the difference between the sum of the first (**606**A) and fifth signal components and the fourth signal component (**606**D) is calculated, with the result being feeder link signal **606.** As shown in FIG. **6,** adder **608**B performs this difference operation as a summation of the first (**606**A), fourth (**606**D), and fifth signal components, with the fourth signal component having a negative input.

Again, those skilled in the art will readily appreciate that other groupings of two or three signals and more or fewer summation or combinatorial logic elements, or other orders or arrangements of the signals for summation, can be employed to reach the desired summation or combination of signals without departing from the teachings of the present invention.

The resulting feeder link signal **612** can be expressed as:

$$(X*PN_I - Y*PN_Q)cos(\omega_c t) + (X*PN_Q + Y*PN_I)sin(\omega_c t)$$

where $X*PN_I - Y*PN_Q$ is referred to as the in-phase component of feeder link signal **612,** and $X*PN_Q + Y*PN_I$ is referred to as the quadrature phase component of feeder link signal **612.**

In a preferred embodiment, $X$ represents the sum of binary data modulated orthogonal, Walsh, codes for those user terminals **106** assigned to a single user link beam **204.** However, in other alternative embodiments $X$ can represent any arbitrary signal input. For example, $X$ can represent a single signal, or the combination of two or more signals. Furthermore, $X$ is not limited to digital modulation, and may represent analog modulated or unmodulated signals.

Skilled artisans will recognize that multiplexer **600** can be implemented as hardware, software, or a combination of both. For instance, a modulator **602** or **604** (**602**A, **602**B, **602**C, **602**D, **604**A, **604**B, **604**C, **604**D) can represent a hardware multiplier, or equivalently, a software routine for multiplying two signals. Similarly, an adder **608** (**608**A, **608**B) can represent a hardware adder, or equivalently, a software routine for adding two or more signals. Those skilled in the art will also recognize that many variations of multiplexer **600** are possible, having different combinations of modulators, adder, or other functional units, combined to produce feeder link signal **612.** The components of multiplexer **600** as shown in FIG. **6** were chosen primarily for ease of explanation.

## IV. Demultiplexing Feeder Link Signals

Returning to FIG. **4,** in step **404,** feeder link signal **612** is transmitted from gateway **108** to satellite **102** according to conventional satellite communication techniques. Feeder link signal **612** is preferably transmitted over a particular user link beam **204** of feeder link **112,** as described above.

In step **406,** feeder link signal **612** is demultiplexed at satellite **102,** producing the two BPSK signals that were combined to form feeder link signal **612** at gateway **108** ($X$ and $Y$ as shown in FIG. **6**). FIG. **7** depicts a flowchart that describes step **406** in greater detail. These operations are described in conjunction with FIG. **8,** which depicts a preferred apparatus for performing the demultiplexing operation, transponder **800**. Transponder **800** includes a demultiplexer **802** and a user link modulator **804,** and is preferably located in satellite **102.**

In step **702,** feeder link signal **612** is demodulated into in-phase and quadrature components. As shown in FIG. **8,** demultiplexer **802** includes six demodulators **812**A, **812**B, **814**A, **814**B, **814**C, and **814**D, two adders **816**A and **816**B, a voltage controlled oscillator (VCO) **806,** and a 90° phase shifter **808**. Demultiplexer **802** receives feeder link signal **612** from a receiving antenna on satellite **102** (not shown), which is fed into demodulators **812**A and **812**B. Skilled artisans will recognize that oftentimes additional modulation stages are required between the antenna and transponder **800,** such as to convert signals from one RF frequency to another in line with allocated link frequencies, or to down-convert from RF to IF frequencies. These additional stages are not depicted or discussed further herein, as their design and implementation are well within the conventional art.

VCO **806** generates the carrier signal $cos(\omega_c t)$ that is in phase with the carrier signal used in feeder link signal **612.** Demultiplexer **802,** therefore, preferably performs coherent demodulation. Conventional techniques are employed to ensure that coherency is maintained. The output of phase shifter **808** is the quadrature phase carrier signal $sin(\omega_c t)$.

Demodulator 812A demodulates feeder link signal **612** by the carrier signal, producing the in-phase component of feeder link signal **612,** $X*PN_I - Y*PN_Q$. Demodulator 812B demodulates feeder link signal **612** by the quadrature phase carrier signal, producing the quadrature phase component of feeder link signal **612,** $X*PN_Q + Y*PN_I$.

In step **704,** the first BPSK signal $X$ is extracted by adding the in-phase component multiplied by $PN_I$ to the quadrature phase component multiplied by $PN_Q$. Demodulator **814**A multiplies the in-phase component by $PN_I$, producing

$$X*PN_I^2 - Y*PN_I PN_Q.$$ Demodulator **814**B multiplies the quadrature phase component by $PN_Q$, producing

$$X*PN_Q^2 + Y*PN_I PN_Q.$$ Note that the spreading codes $PN_I$ and $PN_Q$ must be known by satellite **102** and synchronized with the codes in feeder link signal **606.** Adder **816**A sums the output of demodulator **814**A with the output of demodulator **814**B, producing $2*X$,( recognizing that $PN_I^2 = PN_Q^2 = 1$).

In step **706,** the second BPSK signal Y is extracted by obtaining the difference between the in-phase component multiplied by $PN_Q$ and the quadrature phase component multiplied by $PN_I$. Demodulator **814**C multiplies the in-phase component by $PN_Q$, producing $X*PN_I PN_Q - Y*PN_Q^2$. Demodulator **814**D multiplies the quadrature phase component by $PN_I$, producing $X*PN_I PN_Q + Y*PN_I^2$. Adder **816**B sums the output of demodulator **814**C with the negative or sign reversed output of demodulator **814**D, producing $2*Y$.

Demultiplexer **802,** therefore, has two outputs, $2*X$ and $2*Y$.

**V. User Link Modulation**

Returning again to FIG. **4,** in step **408,** the two BPSK signals are modulated to produce two BPSK modulated, QPSK spread user link signals. As shown in FIG. 8, user link modulator **804** includes eight demodulators **822**A, **822**B, **822**C, **822**D, **824**A, **824**B, **824**C, **824**D, two adders **826**A, **826**B, a VCO **818,** and a 90° phase shifter **820.**

The first BPSK/QPSK signal **832** is produced by the operation of demodulators **822**A, **822**B, **824**A, and **824**B, and adder **826**A. Demodulator **822**A demodulates the output of adder **816**A, $2*X$, by $PN_Q$, the output of which is then multiplied by $sin(\omega_c t)$ in demodulator **824**A, producing $2*X*PN_Q sin(\omega_c t)$. The frequency $\omega_c$ is the center frequency of the appropriate user link beam **204,** as transmitted within a given beam **302** over user link **110** (as described above). Demodulator **822**B demodulates the output of adder **816**A by $PN_I$, the output of which is then multiplied by $cos(\omega_c t)$ in demodulator **824**B, producing $2*X*PN_I cos(\omega_c t)$. Adder **826**A sums the output of demodulator **824**A with the output of demodulator **824**B, producing a first BPSK/QPSK user link signal **832**, given by:

$$2*X*PN_I cos(\omega_c t) + 2*X*PN_Q sin(\omega_c t)$$

Note that user link signal **832** has the proper form for transmission over user link **110,** as described above.

The second BPSK/QPSK signal **834** is produced by the operation of demodulators **822**C, **822**D, **824**C, and **824**D, and adder **826**B. Demodulator **822**A demodulates the output of adder **816**B, $2*Y$, by $PN_Q$, the output of which is then multiplied by $cos(\omega_c t)$ in demodulator **824**C, producing $2*Y*PN_Q cos(\omega_c t)$. Demodulator **822**D demodulates the output of adder **816**B by $PN_I$, the output of which is then multiplied by $sin(\omega_c t)$ in modulator **824**D, producing $2*Y*PN_I sin(\omega_c t)$. Adder **826**B sums the output of demodulator **824**D with the output of demodulator **824**C, producing a second BPSK/QPSK user link signal **834**, given by:

$$2*Y*PN_Q cos(\omega_c t) + 2*Y*PN_I sin(\omega_c t)$$

Note that user link signal **814** has the proper form for transmission over user link **110,** as described above.

Returning to FIG. **4,** in step **410** user link signals **832** and **834** are transmitted via user link **110** to user terminals **106.** This transmission is accomplished according to the above description and conventional satellite-to-ground communication techniques.

**VI. Conclusion**

The previous description of the preferred embodiments is provided to enable any person skilled in the art to make or use the present invention. While the invention has been particularly shown and described with reference to preferred embodiments thereof, it will be understood by those skilled in the art that various changes in form and details may be made therein without departing from the scope of the invention.

**Claims**

**1.** A method for satellite communications wherein a gateway (108) communicates with a satellite (102) over a feeder link (112), and wherein the satellite (102) communicates with terrestrial user terminals (106) over a user link (110), comprising the steps of:

multiplexing (402), at the gateway (108), a first BPSK signal and a second BPSK signal to produce a feeder link signal (612), wherein said feeder link signal (612) is QPSK modulated, QPSK spread;
transmitting (404) said feeder link signal (612) from the gateway (108) to the satellite (102);
demultiplexing (406), at the satellite (102), said feeder link signal (612) to produce said first and second BPSK signals;
modulating (408), at the satellite (102), said first BPSK signal to produce a first user link signal, wherein said first user link signal is BPSK modulated, QPSK spread;
modulating (408), at the satellite (102), said second BPSK signal to produce a second user link signal, wherein said second user link signal is BPSK modulated, QPSK spread; and
transmitting (410) said first and second user link signals from the satellite (102) to the user terminals (106).

2. The method of claim 1, wherein said step of multiplexing (402) a first BPSK signal and a second BPSK signal comprises the steps of:

    modulating (502) said first BPSK signal with an in-phase PN code and a carrier signal to produce a first signal component (606A);
    modulating (504) said first BPSK signal with a quadrature-phase PN code and a quadrature phase of said carrier signal to produce a second signal component (606B);
    modulating (506) said second BPSK signal with said in-phase PN code and said quadrature phase of said carrier signal to produce a third signal component (606C);
    modulating (508) said second BPSK signal with said quadrature-phase PN code and said carrier signal to produce a fourth signal component (606D);
    summing (509) said first, second, and third signal components to the negative of said fourth signal component to produce a feeder link signal (612).

3. The method of claim 2, wherein said step of summing (509) comprises the steps of:

    summing (510) said second, and third signal components (606B, 606C) to produce a fifth signal component; and
    summing (512) said first (606A) and fifth signal components to the negative of said fourth signal component (606D) to produce said feeder link signal (612).

4. The method of claim 2, wherein said step of demultiplexing (406) said feeder link signal (612) comprises the steps of:

    demodulating (702) said feeder link signal into an in-phase component and a quadrature component;
    adding (704) said in-phase component multiplied by said in-phase PN code to said quadrature phase component multiplied by said quadrature phase PN code to extract said first BPSK signal; and
    obtaining the difference (706) between said in-phase component multiplied by said quadrature phase PN code and said quadrature phase component multiplied by said in-phase PN code to extract said second BPSK signal.

5. The method of claim 1, wherein said first BPSK signal comprises a first sum of binary data modulated Walsh codes, and wherein said second BPSK signal comprises a second sum of binary data modulated Walsh codes.

6. A satellite communications system (100) wherein a gateway (108) communicates with a satellite (102) over a feeder link (112), and wherein the satellite (102) communicates with terrestrial user terminals (106) over a user link (110), comprising:

    means for multiplexing (600), at the gateway (108), a first BPSK signal and a second BPSK signal to produce a feeder link signal (612), wherein said feeder link signal (612) is QPSK modulated, QPSK spread;
    means for transmitting (120) said feeder link signal (612) from the gateway (108) to the satellite (102);
    means for demultiplexing (802), at the satellite (102), said feeder link signal (612) to produce said first and second BPSK signals;
    means for modulating (804), at the satellite (102), said first BPSK signal to produce a first user link signal (832), wherein said first user link signal (832) is BPSK modulated, QPSK spread;
    means for modulating (804) said second BPSK signal to produce a second user link signal (834), wherein said second user link signal (834) is BPSK modulated, QPSK spread; and
    means for transmitting said first and second user link signal (832, 834) from the satellite (102) to the user terminals (106).

7. The system of claim 6, wherein said means for multiplexing (600) comprises:

    means for modulating (602A, 604A) said first BPSK signal with an in-phase PN code and a carrier signal to produce a first signal component (606A);
    means for modulating (602B, 604B) said first BPSK signal with a quadrature-phase PN code and a quadrature phase of said carrier signal to produce a second signal component (606B);
    means for modulating (602C, 604C) said second BPSK signal with said in-phase PN code and said quadrature phase of said carrier signal to produce a third signal component (606C);
    means for modulating (602D, 604D) said second BPSK signal with said quadrature-phase PN code and said carrier signal to produce a fourth signal component (606D);
    means for summing (608A, 608B) said first, second, and third signal components (606A-606C) to the negative of said fourth signal component (606D) to produce said feeder link signal (612).

8. The system of claim 7, wherein said means for demultiplexing (802) comprises:

means for demodulating (812A, 812B) said feeder link signal (612) into an in-phase component and a quadrature component;
means for adding (814A, 814D, 816A) said in-phase component multiplied by said in-phase PN code to said quadrature phase component multiplied by said quadrature phase PN code to extract said first BPSK signal; and
means for obtaining the difference (814B, 814C, 816B) between said in-phase component multiplied by said quadrature phase PN code and said quadrature phase component multiplied by said in-phase PN code to extract said second BPSK signal.

9. The system of claim 6, wherein said first BPSK signal comprises a sum of binary data modulated Walsh codes, and wherein said second BPSK signal comprises a sum of binary data modulated Walsh codes.

**Patentansprüche**

1. Ein Verfahren für Satellitenkommunikationen, wobei ein Gateway (108) mit einem Satelliten (102) über eine Feeder-Verbindung (112) kommuniziert, und wobei der Satellit (102) mit terrestrischen Benutzerterminals (106) über eine Benutzerverbindung (110) kommuniziert, wobei das Verfahren die folgenden Schritte aufweist:

Multiplexen (402) bei dem Gateway (108) eines ersten BPSK-Signals und eines zweiten BPSK-Signals um ein Feeder-Verbindungssignal (612) zu erzeugen, wobei das Feeder-Verbindungssignal (612) QPSK moduliert, QPSK gespreizt ist;
Senden (404) des Feeder-Verbindungssignals (612) von dem Gateway (108) zu dem Satelliten (102);
Demultiplexen (406) bei dem Satelliten (102) des Feeder-Verbindungssignals (612) um erste und zweite BPSK-Signale zu erzeugen;
Modulieren (408) bei dem Satelliten (102) des ersten BPSK-Signals um ein erstes Benutzerverbindungssignal zu erzeugen, wobei das erste Benutzerverbindungssignal BPSK moduliert, QPSK gespreizt ist; Modulieren (408) bei dem Satelliten (102), des zweiten BPSK-Signals um ein zweites Benutzerverbindungssignal zu erzeugen, wobei das zweite Benutzerverbindungssignal BPSK moduliert, QPSK gespreizt ist; und
Senden (410) der ersten und zweiten Benutzerverbindungssignale von dem Satelliten (102) zu den Benutzerterminals (106).

2. Verfahren nach Anspruch 1, wobei der Schritt des Multiplexens (402) eines ersten BPSK-Signals und eines zweiten BPSK-Signals folgende Schritte aufweist:

Modulieren (502) des ersten BPSK-Signals mit einem In-Phasen PN-Code und einem Trägersignal um eine erste Signalkomponente (606A) zu erzeugen;
Modulieren (504) des ersten BPSK-Signals mit einem Quadratur-Phasen PN-Code und einer Quadratur-Phase des Trägersignals, um eine zweite Signalkomponente (606B) zu erzeugen;
Modulieren (506) des zweiten BSPK-Signals mit dem In-Phasen PN-Code und der Quadratur-Phase des Trägersignals, um eine dritte Signalkomponente (606C) zu erzeugen;
Modulieren (508) des zweiten BPSK-Signals mit dem Quadratur-Phasen-PN-Code und dem Trägersignal, um eine vierte Signalkomponente (606D) zu erzeugen;
Summieren (509) der ersten, zweiten und dritten Signalkomponenten zu dem Negativen der vierten Signalkomponente, um ein Feeder-Verbindungssignal (612) zu erzeugen.

3. Verfahren nach Anspruch 2, wobei der Schritt des Summierens (509) die folgenden Schritte aufweist:

Summieren (510) der zweiten und dritten Signalkomponenten (606B, 606C), um eine fünfte Signalkomponente zu erzeugen; und
Summieren (512) der ersten (606A) und fünften Signalkomponente zu dem Negativen der vierten Signalkomponente (606D) um das Feeder-Verbindungssignal (612) zu erzeugen.

4. Verfahren nach Anspruch 2, wobei der Schritt des Demultiplexens (406) des Feeder-Verbindungssignals (612) die folgenden Schritte aufweist:

Demodulieren (702) des Feeder-Verbindungssignals in eine In-Phasen-Komponente und eine Quadratur-Komponente;

Addieren (704) der In-Phasen-Komponente, multipliziert durch den In-Phasen-PN-Code zu der Quadratur-Phasen-Komponente, multipliziert durch den Quadratur-Phasen-PN-Code um das erste BPSK-Signal zu extrahieren; und

Erlangen der Differenz (706) zwischen der In-Phasen-Komponente, multipliziert mit dem Quadratur-Phasen-PN-Code und der Quadratur-Phasen-Komponente, multipliziert mit dem In-Phasen-PN-Code, um das zweite BPSK-Signal zu extrahieren.

5. Verfahren nach Anspruch 1, wobei das erste BPSK-Signal eine erste Summe von binärdaten-modulierten Walsh-Codes aufweist, und wobei das zweite BPSK-Signal eine zweite Summe von binärdaten-modulierten Walsh-Codes aufweist.

6. Ein Satelliten-Kommunikationssystem (100), wobei ein Gateway (108) mit einem Satelliten (102) über eine Feeder-Verbindung (112) kommuniziert, und wobei der Satellit (102) mit terrestrischen Benutzerterminals (106) über eine Benutzerverbindung (110) kommuniziert, wobei das System Folgendes aufweist:

Mittel zum Multiplexen (600) bei dem Gateway (108) eines ersten BPSK-Signals und eines zweiten BPSK-Signals, um ein Feeder-Verbindungssignal (612) zu erzeugen, wobei das Feeder-Verbindungssignal (612) QPSK moduliert, QPSK gespreizt ist;

Mittel zum Senden (120) des Feeder-Verbindungssignals (612) von dem Gateway (108) zu dem Satelliten (102);

Mittel zum Demultiplexen (802) bei dem Satelliten (102) des Feeder-Verbindungssignals (612), um die ersten und zweiten BPSK-Signale zu erzeugen;

Mittel zum Modulieren (804) bei dem Satelliten (102) des ersten BSPK-Signals zum Erzeugen eines ersten Benutzerverbindungssignals (832), wobei das erste Benutzerverbindungssignal (832) BPSK moduliert, QPSK gespreizt ist;

Mittel zum Modulieren (804) des zweiten BPSK-Signals, um ein zweites Benutzerverbindungssignal (834) zu erzeugen, wobei das zweite Benutzerverbindungssignal (834) BPSK moduliert, QPSK gespreizt ist; und

Mittel zum Senden der ersten und zweiten Benutzerverbindungssignale (832, 834) von dem Satelliten (102) zu den Benutzerterminals (106).

7. System nach Anspruch 6, wobei die Mittel zum Multiplexen (600) Folgendes aufweisen:

Mittel zum Modulieren (602A, 604A) des ersten BPSK-Signals mit einem In-Phasen-PN-Code und einem Trägersignal zum Erzeugen einer ersten Signalkomponente (606A);

Mittel zum Modulieren (602B, 604B) des ersten BPSK-Signals mit einem Quadratur-Phasen-PN-Code und einer Quadratur-Phase des Trägersignals, um eine zweite Signalkomponente (606B) zu erzeugen; Mittel zum Modulieren (602C, 604C) des zweiten BPSK-Signals mit dem In-Phasen-PN-Code und der Quadratur-Phase des Trägersignals, um eine dritte Signalkomponente (606C) zu erzeugen;

Mittel zum Modulieren (602D, 604D) des zweiten BPSK-Signals mit dem Quadratur-Phasen-PN-Code und dem Trägersignal, um eine vierte Signalkomponente (606D) zu erzeugen;

Mittel zum Summieren (608A, 608B) der ersten, zweiten und dritten Signalkomponenten (606A-606C) mit dem Negativen der vierten Signalkomponente (606D) zum Erzeugen des Feeder-Verbindungssignals (612).

8. System nach Anspruch 7, wobei die Mittel zum Demultiplexen (802) Folgendes aufweisen:

Mittel zum Demodulieren (812A, 812B) des Feeder-Verbindungssignals (612) in eine In-Phasen-Komponente und eine Quadratur-Komponente;

Mittel zum Addieren (814A, 814D, 816A) der In-Phasen-Komponente, multipliziert durch den In-Phasen-PN-Code zu der Quadratur-Phasen-Komponente, multipliziert mit dem Quadratur-Phasen-PN-Code, um das erste BPSK-Signal zu extrahieren; und

Mittel zum Erlangen der Differenz (814B, 814C, 816B) zwischen der In-Phasen-Komponente, multiplizert durch den Quadratur-Phasen PN-Code und der Quadratur-Phasen-Komponente, multiplizert mit dem In-Phasen PN-Code, um das zweite BPSK-Signal zu extrahieren.

9. System nach Anspruch 6, wobei das erste BPSK-Signal eine Summe von binärdaten-modulierten Walsh-Codes aufweist, und wobei das zweite BPSK-Signal eine Summe von binärdaten-modulierten Walsh-Codes aufweist.

**Revendications**

1. Procédé de communication par satellite dans lequel une passerelle (108) communique avec un satellite (102) par une liaison de connexion (112), et dans lequel le satellite (102) communique avec des terminaux d'utilisateurs terrestres (106) par une liaison d'utilisateur (110), comprenant les étapes suivantes :

   multiplexage (402), dans la passerelle (108), d'un premier signal MDPB et d'un deuxième signal MDPB pour produire un signal de liaison de connexion (612), dans lequel ledit signal de liaison de connexion (612) est modulé en MDPQ et étalé en MDPQ ;
   transmission (404) dudit signal de liaison de connexion (612) de la passerelle (108) vers le satellite (102) ;
   démultiplexage (406), dans le satellite (102), dudit signal de liaison de connexion (612) pour produire lesdits premier et deuxième signaux MDPB ;
   modulation (408), dans le satellite (102), dudit premier signal MDPB pour produire un premier signal de liaison d'utilisateur, ledit premier signal de liaison d'utilisateur étant modulé en MDPB et étalé en MDPQ ;
   modulation (408), dans le satellite (102), dudit deuxième signal MDPB pour produire un deuxième signal de liaison d'utilisateur, ledit deuxième signal de liaison d'utilisateur étant modulé en MDPB et étalé en MDPQ ; et
   transmission (410) desdits premier et deuxième signaux de liaison d'utilisateur du satellite (102) vers les terminaux d'utilisateurs (106).

2. Procédé selon la revendication 1, dans lequel ladite étape de multiplexage (402) d'un premier signal MDPB et d'un deuxième signal MDPB comprend les étapes suivantes :

   modulation (502) dudit premier signal MDPB avec un code de pseudo-bruit en phase et un signal de porteuse pour produire une première composante de signal (606A) ;
   modulation (504) dudit premier signal MDPB avec un code de pseudo-bruit en quadrature et une phase de quadrature dudit signal de porteuse pour produire une deuxième composante de signal (606B);
   modulation (506) dudit deuxième signal MDPB avec ledit code de pseudo-bruit en phase et ladite phase de quadrature dudit signal de porteuse pour produire une troisième composante de signal (606C) ;
   modulation (508) dudit deuxième signal MDPB avec ledit code de pseudo-bruit en quadrature et ledit signal de porteuse pour produire une quatrième composante de signal (606D) ;
   addition (509) desdites première, deuxième et troisième composantes de signal au négatif de ladite quatrième composante de signal pour produire un signal de liaison de connexion (612).

3. Procédé selon la revendication 2, dans lequel ladite étape d'addition (509) comprend les étapes suivantes :

   addition (510) desdites deuxième et troisième composantes de signal (606B, 606C) pour produire une cinquième composante de signal ; et
   addition (512) desdites première (606A) et cinquième composantes de signal au négatif de ladite quatrième composante de signal (606D) pour produire ledit signal de liaison de connexion (612).

4. Procédé selon la revendication 2, dans lequel ladite étape de démultiplexage (406) dudit signal de liaison de connexion (612) comprend les étapes suivantes :

   démodulation (702) dudit signal de liaison de connexion pour obtenir une composante en phase et une composante en quadrature ;
   addition (704) de ladite composante en phase multipliée par ledit code de pseudo-bruit en phase à ladite composante en quadrature multipliée par ledit code de pseudo-bruit en quadrature pour extraire ledit premier signal MDPB ; et
   obtenir la différence (706) entre ladite composante en phase multipliée par ledit code de pseudo-bruit en quadrature et ladite composante en quadrature multipliée par ledit code de pseudo-bruit en phase pour extraire ledit deuxième signal MDPB.

5. Procédé selon la revendication 1, dans lequel ledit premier signal MDPB comprend une première somme de codes de Walsh modulés par des données binaires, et dans lequel ledit deuxième signal MDPB comprend une deuxième somme de codes de Walsh modulés par des données binaires.

6. Système de communication par satellite (100) dans lequel une passerelle (108) communique avec un satellite (102) par une liaison de connexion (112), et dans lequel le satellite (102) communique avec des terminaux d'utilisateurs terrestres (106) par une liaison d'utilisateur (110), comprenant :

un moyen pour multiplexer (600), dans la passerelle (108), un premier signal MDPB et un deuxième signal MDPB pour produire un signal de liaison de connexion (612), dans lequel ledit signal de liaison de connexion (612) est modulé en MDPQ et étalé en MDPQ ;

un moyen pour transmettre (120) ledit signal de liaison de connexion (612) de la passerelle (108) vers le satellite (102) ;

un moyen pour démultiplexer (802), dans le satellite (102), ledit signal de liaison de connexion (612) pour produire lesdits premier et deuxième signaux MDPB ;

un moyen pour moduler (804), dans le satellite (102), ledit premier signal MDPB pour produire un premier signal de liaison d'utilisateur (832), ledit premier signal de liaison d'utilisateur (832) étant modulé en MDPB et étalé en MDPQ ;

un moyen pour moduler (804) ledit deuxième signal MDPB pour produire un deuxième signal de liaison d'utilisateur (834), ledit deuxième signal de liaison d'utilisateur (834) étant modulé en MDPB et étalé en MDPQ ; et

un moyen pour transmettre lesdits premier et deuxième signaux de liaison d'utilisateur (832, 834) du satellite (102) vers les terminaux d'utilisateurs (106).

7. Système selon la revendication 6, dans lequel ledit moyen de multiplexage (600) comprend :

un moyen pour moduler (602A, 604A) ledit premier signal MDPB avec un code de pseudo-bruit en phase et un signal de porteuse pour produire une première composante de signal (606A) ;

un moyen pour moduler (602B, 604B) ledit premier signal MDPB avec un code de pseudo-bruit en quadrature et une phase de quadrature dudit signal de porteuse pour produire une deuxième composante de signal (606B) ;

un moyen pour moduler (602C, 604C) ledit deuxième signal MDPB avec ledit code de pseudo-bruit en phase et ladite phase de quadrature dudit signal de porteuse pour produire une troisième composante de signal (606C) ;

un moyen pour moduler (602D, 604D) ledit deuxième signal MDPB avec ledit code de pseudo-bruit en quadrature et ledit signal de porteuse pour produire une quatrième composante de signal (606D) ;

un moyen pour additionner (608A, 608B) lesdites première, deuxième et troisième composantes de signal (606A-606C) au négatif de ladite quatrième composante de signal (606D) pour produire ledit signal de liaison de connexion (612).

8. Système selon la revendication 7, dans lequel ledit moyen de démultiplexage (802) comprend :

un moyen pour démoduler (812A, 812B) ledit signal de liaison de connexion (612) pour obtenir une composante en phase et une composante en quadrature ;

un moyen pour additionner (814A, 814D, 816A) ladite composante en phase multipliée par le code de pseudo-bruit en phase à ladite composante en quadrature multipliée par ledit code de pseudo-bruit en quadrature pour extraire ledit premier signal MDPB ; et

un moyen pour obtenir la différence (814B, 814C, 816B) entre ladite composante en phase multipliée par ledit code de pseudo-bruit en quadrature et ladite composante en quadrature multipliée par ledit code de pseudo-bruit en phase pour extraire ledit deuxième signal MDPB.

9. Système selon la revendication 6, dans lequel ledit premier signal MDPB comprend une somme de codes de Walsh modulés par des données binaires, et dans lequel ledit deuxième signal MDPB comprend une somme de codes de Walsh modulés par des données binaires.

FIG. 1

FIG. 2A

FIG. 2B

300A

302M

302L

302D    302E    302N

302K

302C    302A    302F    302O

302J

302B    302G

302I    302P

302H

FIG. 3A

300B

302I    302J

302H    302K

302G    302L

302F    302M

302A

302E    302N

302D    302O

302C    302P

302B

FIG. 3B

400

402

```
MULTIPLEX TWO BPSK
SIGNALS TO PRODUCE A
QPSK MODULATED, QPSK
SPREAD FEEDER LINK SIGNAL
```

404

```
TRANSMIT THE FEEDER LINK
SIGNAL FROM THE GATEWAY
TO THE SATELLITE
```

406

```
DEMULTIPLEX THE FEEDER
LINK SIGNAL TO PRODUCE
THE TWO BPSK SIGNALS
```

408

```
MODULATE THE TWO BPSK
SIGNALS TO PRODUCE TWO
BPSK MODULATED, QPSK
SPREAD USER LINK SIGNALS
```

410

```
TRANSMIT THE USER LINK
SIGNALS FROM THE SATELLITE
TO THE USER TERMINALS
```

FIG. 4

402

┌─────────────────────────────────────────┐ 502
│         MODULATE THE FIRST BPSK SIGNAL   │
│      USING AN IN-PHASE PN CODE AND A     │
│         CARRIER SIGNAL TO PRODUCE A      │
│           FIRST SIGNAL COMPONENT         │
└─────────────────────────────────────────┘

┌─────────────────────────────────────────┐ 504
│      MODULATE THE FIRST BPSK SIGNAL USING A │
│      QUADRATURE-PHASE PN CODE AND A      │
│     QUADRATURE PHASE OF THE CARRIER SIGNAL │
│       TO PRODUCE A SECOND SIGNAL COMPONENT │
└─────────────────────────────────────────┘

┌─────────────────────────────────────────┐ 506
│        MODULATE THE SECOND BPSK SIGNAL USING │
│      THE IN-PHASE PN CODE AND THE QUADRATURE │
│       PHASE OF THE CARRIER SIGNAL TO PRODUCE │
│            A THIRD SIGNAL COMPONENT      │
└─────────────────────────────────────────┘

┌─────────────────────────────────────────┐ 508
│       MODULATE THE SECOND BPSK SIGNAL USING │
│       THE QUADRATURE-PHASE PN CODE AND THE │
│        CARRIER SIGNAL TO PRODUCE A FOURTH │
│               SIGNAL COMPONENT           │
└─────────────────────────────────────────┘

OR

┌──────────────────────┐ 509
│  SUM THE FIRST, SECOND, AND │
│  THIRD SIGNAL COMPONENTS │
│  AND SUBTRACT THE FOURTH │
│  SIGNAL COMPONENT TO  │
│  PRODUCE THE FEEDER   │
│      LINK SIGNAL      │
└──────────────────────┘

┌──────────────────────┐ 510
│  SUM THE SECOND AND THIRD │
│  SIGNAL COMPONENTS TO │
│  PRODUCE A FIFTH SIGNAL │
│      COMPONENT        │
└──────────────────────┘

┌──────────────────────┐ 512
│  SUM THE FIRST AND FIFTH │
│  SIGNAL COMPONENTS AND │
│  SUBTRACT THE FOURTH  │
│  SIGNAL COMPONENT     │
│  FROM THIS SUM TO PRODUCE │
│  THE FEEDER LINK SIGNAL │
└──────────────────────┘

FIG.5

FIG. 6

406

/-702

DEMODULATE THE FEEDER
LINK SIGNAL INTO IN-PHASE
AND QUADRATURE
COMPONENTS

/-704

EXTRACT THE FIRST BPSK
SIGNAL BY ADDING THE IN-
PHASE COMPONENT
MULTIPLIED BY THE IN-
PHASE PN CODE TO THE
QUADRATURE PHASE
COMPONENT MULTIPLIED BY
THE QUADRATURE PHASE
PN CODE

/-706

EXTRACT THE SECOND BPSK
SIGNAL BY OBTAINING THE
DIFFERENCE BETWEEN THE
IN-PHASE COMPONENT
MULTIPLIED BY THE
QUADRATURE PHASE PN
CODE AND THE QUADRATURE
PHASE COMPONENT
MULTIPLIED BY THE IN-
PHASE PN CODE

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4901307 A
- US 5691974 A
- EP 0829982 A1
- US 37856299 A